# EUROPEAN PATENT APPLICATION

(11) **EP 4 700 502 A1**
(43) Date of publication of application: **25.02.2026**
(21) Application number: 24894307.8
(22) Date of filing: 16.08.2024
(51) Int. Cl.: G05B 9/03, G05B 19/05, G05B 23/02

(54) **DUAL CONTROLLER OPERATING METHOD AND IO-LINK MASTER PROVIDING SAME**

(30) Priority: 20.11.2023 KR 20230160502
(71) Applicant: LG Energy Solution, Ltd., Seoul 07335 (KR)
(72) Inventor: CHOI, Bobi, Daejeon 34122 (KR); YANG, Seongyeol, Daejeon 34122 (KR)
(74) Representative: Plasseraud IP
(86) International application number: PCT/KR2024/012169
(87) International publication number: WO 2025/110410

(57) **Abstract**

The present disclosure relates to a method of operating a dual controller and an IO-Link master providing the method, and the IO-Link master includes a first controller configured to transmit first data collected by a first IO-Link device to a programmable logic controller (PLC) and control the first IO-Link device according to a first control signal of the PLC, and a second controller configured to transmit second data collected by a second IO-Link device to the PLC and control the second IO-Link device according to a second control signal of the PLC, wherein each of the first controller and a second controller is configured to communicate at a certain period to diagnose an occurrence of a failure event of the other party.

## Description

### [Technical Field]

### CROSS-REFERENCE TO RELATED APPLICATION

This application claims priority to and the benefit of Korean Patent Application No. 10-2023-0160502 filed in the Korean Intellectual Property Office on November 20, 2023, the entire contents of which are incorporated herein by reference.

The present disclosure relates to a method of operating a dual controller and an IO-Link master providing the method.

### [Background Art]

IO-Link is a digital point-to-point wired (or wireless) serial communication protocol that uses 3-wire cables widely used for connection of sensors and actuators. IO-Link also includes a standard 5-wire wired interface to process devices that require additional power. IO-Link was developed by the IO-Link consortium and integrated into the IEC 61131-9 standard for programmable logic controller (PLC) in 2010 as "single-drop digital communication interface (SDCI) for small sensors and actuators".

An IO-Link system includes an IO-Link master and an IO-Link device (e.g., sensors, actuators, etc.)

All IO-Link devices are connected to the IO-Link master. In addition, the PLC executes a user program and exchanges I/O with the IO-Link master. Through a field bus (e.g., EtherCAT, Profibus, or Omron NX bus), the PLC is connected to a master device and the IO-Link master is connected to a slave device.

Meanwhile, in the IO-Link master, one micro controller unit (MCU) manages and operates approximately eight IO ports. If a failure occurs in the MCU and the MCU does not smoothly perform the original function, all IO-Link devices connected to the IO-Link master may not communicate. When such a failure event occurs, it may cause a serious problem of having to stop operations of all equipment and lines connected to the IO-Link master.

### [Disclosure]

### [Technical Problem]

The present disclosure attempts to provide a method of operating a dual controller and an IO-Link master providing the method capable of preventing a problem that causes the operation of the entire IO-Link system to be stopped even when a failure event occurs in a controller included in the IO-Link master.

### [Technical Solution]

An IO-Link master according to an aspect of the present disclosure includes a first controller configured to transmit first data collected by a first IO-Link device to a programmable logic controller (PLC) and control the first IO-Link device according to a first control signal of the PLC, and a second controller configured to transmit second data collected by a second IO-Link device to the PLC and control the second IO-Link device according to a second control signal of the PLC, wherein each of the first controller and the second controller is configured to communicate at a certain period to diagnose an occurrence of a failure event of the other party.

Each of the first controller and a second controller may diagnose that the failure event occurs when no communication message is received for more than a reference time.

Each of the first controller and a second controller may transmit an alarm message corresponding to the occurrence of the failure event to the PLC when each of the first controller and a second controller diagnoses the occurrence of the failure event.

The first IO-Link device may transmit the first data to a first transceiver in a first communication method, and the second IO-Link device may transmit the second data to a second transceiver in a second communication method.

The IO-Link master may further include a first transceiver connected to the first IO-Link device through a first IO port to receive the first data and transmit the received first data to the first controller, and a first transceiver connected to the second IO-Link device through a second IO port to receive the second data and transmit the received second data to the second controller.

An IO-Link master according to another aspect of the present disclosure includes a master controller configured to transmit data collected by an IO-Link device to a programmable logic controller (PLC) and control the IO-Link device according to a control signal of the PLC, and a slave controller configured to communicate with the master controller at a certain period, and, when diagnosing an occurrence of a failure event of the master controller, replace and perform a function performed by the master controller.

The slave controller may diagnose that the failure event has occurred in the master controller when no communication message is received from the master controller for more than a reference time.

The slave controller may transmit an alarm message corresponding to the occurrence of the failure event to the PLC when the slave controller diagnoses the occurrence of the failure event.

A method of operating a dual controller according to another aspect of the present disclosure includes driving an IO-Link master by a first controller controlling a first IO-Link device according to a first control signal of a programmable logic controller (PLC), and a second controller controlling a second IO-Link device according to a second control signal of the PLC, the first controller and the second controller diagnosing an occurrence of a failure event of the other party when a certain period arrives, and the first controller or the second controller transmitting an alarm message corresponding to the occurrence of the failure event of the other party to the PLC when the failure event occurs as a result of diagnosing.

The diagnosing of the occurrence of the failure event of the other party may include operating the dual controller diagnosing that the failure event occurs when no communication message is received for more than a reference time.

### [Advantageous Effects]

According to the present disclosure, the dual controller may be mounted on the IO-Link master, and thus, even if a failure event occurs in some of controllers, the IO-Link master may be configured to be driven by the remaining controllers, thereby preventing the problem that causes the operation of the entire IO-Link system to stop.

According to the present disclosure, the dual controllers may be configured to use different communication protocols, thereby expanding types of IO-Link devices connected to the IO-Link master.

### [Description of the Drawings]

FIG. 1 is a conceptual diagram illustrating an IO-Link system according to an embodiment.
FIG. 2 is a diagram explaining a configuration of the IO-Link master of FIG. 1 in detail according to an embodiment.
FIG. 3 is a diagram explaining the configuration of the IO-Link master of FIG. 1 in detail according to another embodiment.
FIG. 4 is a flowchart illustrating a method of operating a dual micro controller unit (MCU) according to an embodiment.

### [Mode for Invention]

Hereinafter, referring to the drawings, the embodiment disclosed in this specification will be described in detail, but the same or similar reference numerals are given to the same or similar constituent elements, and redundant descriptions thereof will be omitted. The suffixes "module" and/or "- portion" for the constituent element used in the following description are given or mixed in consideration of only the ease of drafting the specification, and do not have meanings or functions distinguished from each other by themselves. In addition, in describing the embodiment disclosed in this specification, when it is determined that a detailed description of a related known technology may obscure the gist of the exemplary embodiment disclosed in this specification, the detailed description thereof will be omitted. In addition, the attached drawing is only for easy understanding of the exemplary embodiment disclosed in this specification, the technical idea disclosed in this specification is not limited by the attached drawing, and it should be understood to include all modifications, equivalents and substitutes included in the spirit and scope of the present disclosure.

The terms including ordinal numbers such as first, second, etc. may be used to describe various constituent elements, but the constituent elements are not limited by the terms. The terms are used only for the purpose of distinguishing one constituent element from another constituent element.

It will be understood that when a component is referred to as being "connected to" or "coupled to" another component, the component may be connected or coupled to the other component or intervening components may be present. In contrast, when a component is referred to as being "directly connected to" or "directly coupled to" another component, there are no intervening components present.

In the present application, the terms such as "comprise" or "have" are intended to designate the presence of a feature, number, step, operation, constituent element, part, or combinations thereof described in the specification, and it should be understood that the terms do not preclude in advance the possibility of the presence or addition of one or more other features or numbers, steps, operations, constituent elements, parts or combinations thereof.

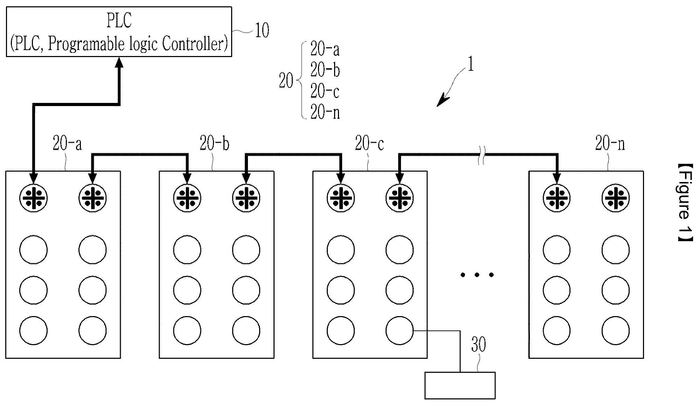

FIG. 1 is a conceptual diagram illustrating an IO-Link system according to an embodiment.

Referring to FIG. 1, an IO-Link system 1 includes a programmable logic controller (PLC) 10, an IO-Link master 20, and an IO-Link device 30.

IO-Link is an industrial communication standard designed to connect sensors and/or actuators of an industrial system to control networks (e.g., a PLC). IO-Link is a point-to-point communication link based on a standard connector and a cable protocol. The IO-Link system 1 was developed to interact with an industry-standard 3-wire sensor and actuator infrastructure, and enables bidirectional exchange of data between sensors and devices.

In FIG. 1, each of a plurality of IO-Link masters 20-a, 20-b, 20-c, and 20-n may have a communication line connected to the IO-Link master 20 located adjacent thereto in a ring type. For example, the first IO-Link master 20-a may have one end connected to the PLC 10 and the other end connected to the second IO-Link master 20-b located adjacent thereto. For another example, the second IO-Link master 20-b may have one end connected to the first IO-Link master 20-b located adjacent thereto and the other end connected to the third IO-Link master 20-c located adjacent thereto. However, the present disclosure is not limited thereto, and the plurality of IO-Link masters 20-a, 20-b, 20-c, and 20-n and the PLC 10 may be connected in various ways to communicate with each other.

The PLC 10 may be a main controller that manages the overall IO-Link system 1. The PLC 10 may analyze data collected by the IO-Link device 30 and generate a control signal according to an analysis result. For example, referring to FIG. 1, when a plurality of pieces of data is received from a plurality of IO-Link devices through the plurality of IO-Link masters 20-a, 20-b, 20-c, and 20-n, the PLC 10 may generate the control signal by comprehensively analyzing the received data.

The IO-Link master 20 may be a sub-controller that assists a function of the PLC 10. The IO-Link master 20 may control the IO-Link device 30 according to the control signal transmitted from the PLC 10. Specifically, the IO-Link master 20 may be directly connected to the plurality of IO-Link devices 30 in various industrial sites to transmit data received from the plurality of IO-Link devices 30 to the PLC 10. In addition, the IO-Link master 20 may directly control the plurality of IO-Link devices 30 according to the control signal transmitted from the PLC 10.

FIG. 1 shows that one IO-Link device 30 is connected to one IO-Link master 20-c, but the present disclosure is not limited thereto, and a plurality of IO-Link devices may be connected to the IO-Link master 20-c. Hereinafter, reference numeral "j" is used when indicating a specific IO-Link master from among the plurality of IO-Link masters 20-a, 20-b, 20-c, and 20-n. However, for the convenience of description, each of a controller, an Ethernet port, an IO port, and a transceiver included in the IO-Link master 20-j is described with "j" omitted.

The IO-Link device 30 may be a device that senses various types of information in an industrial site. For example, the IO-Link device 30 may include a sensor and an actuator corresponding to peripheral nerves of an automated smart factory or smart plant.

In the IO-Link system 1, the sensor is a sensor with an IO-Link connection function, and, unlike a general sensor, may transmit event data, process data, and service data to the PLC 10. Then, the PLC 10 may maintain, repair, and manage various industrial facilities connected to the sensor and/or the actuator in real time through the control signal. For example, the sensor may be a sensor that tracks and reports a location, displacement, temperature, pressure, and color, and may include an IO-Link photoelectric sensor, a sensor equipped with an RFID detection system, etc.

In the IO-Link system 1, the actuator may be an electric mechanical component that accommodates an electric input and brings some mechanical outputs. Also, an IO-Link compatible actuator may include various options based on a pneumatic linear actuator, pneumatic manifold and valve, other solenoids, and a stepper motor.

The IO-Link device 30 may transmit the event data, the process data, and the service data to the PLC 10 through the IO-Link master 20 periodically or aperiodically.

The event data and the service data may be data transmitted aperiodically, and the process data may be data transmitted periodically. The event data may include information solving problems caused by a sensor and a switch signal, error and maintenance repair information, and information about a problematic or damaged switch. The process data, which is basic operation information such as location, level, distance, etc., may be data that is continuously collected by the IO-Link device 30 and transmitted upstream to the IO-Link master 20. The service data may include information about parameter setting, status, location, and other read values of the IO-Link device 30.

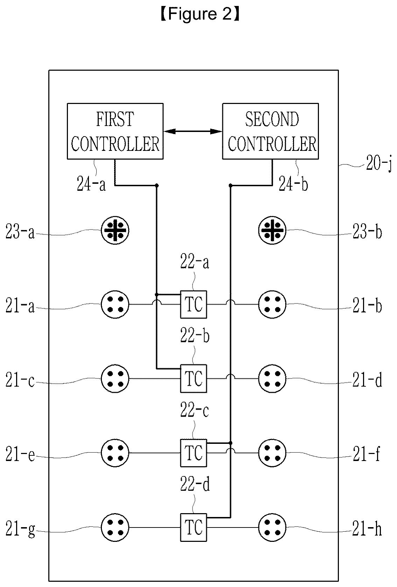

FIG. 2 is a diagram explaining a configuration of an IO-Link master of FIG. 1 in detail according to an embodiment.

Referring to FIG. 2, an IO-Link master 20-j includes an IO port 21, a transceiver 22, an Ethernet port 23, and a micro controller (MCU) 24.

The IO port 21 may include a plurality of IO ports 21-a, 21-b, 21-c, 21-d, 21-e, 21-f, 21-g, and 21-h to connect each of a plurality of IO-Link devices to the IO-Link master 20-j. FIG. 2 shows the 8 IO ports 21-a, 21-b, 21-c, 21-d, 21-e, 21-f, 21-g, and 21-h, but the present disclosure is not limited thereto, and the IO-Link master 20-j may include various numbers of IO ports 21. Hereinafter, for convenience of description, the IO port 21 will be described, but the corresponding description may be equally applied to all of the plurality of IO ports 21-a, 21-b, 21-c, 21-d, 21-d, 21-e, 21-f, 21-g, and 21-h.

The IO port 21 may be a connection portion for communication between the IO-Link device 30 and the IO-Link master 20-j. For example, when a connector of the IO-Link device 30 is inserted into the IO port 21, the IO-Link device 30 and the IO-Link master 20-j may be connected to communicate with each other.

As shown in FIG. 2, the IO port 21 may be configured to include four wire connectors such that a port class A connector is connected. The port class A connector includes four wires including three basic connection wires and one additional wire that may be used as DI (or DO). However, the present disclosure is not limited thereto, various connectors may be connected, and, for example, the IO port 21 may be configured such that a port class B connector including five wires may be connected.

The transceiver 22 may be a transceiving device for communicating with the IO-Link device 30. For example, the transceiver 22 may receive data from the IO-Link device 30 connected through the IO port 21 and transmit the received data to the MCU 24. In addition, the transceiver 22 may transmit a control signal transmitted from the PLC 10 to the IO-Link device 30 by the control of the MCU 24.

According to an embodiment, the IO-Link master 20-j may include a plurality of transceivers 22-a, 22-b, 22-c, and 22-d. Referring to FIG. 2, one transceiver 22 may communicate with two IO-Link devices 30. For example, the first transceiver 22-a may communicate with a first IO-Link device (not shown) and a second IO-Link device (not shown) respectively connected through the first IO port 21-a and the second IO port 21-b. For another example, the second transceiver 22-b may communicate with a third IO-Link device (not shown) and a fourth IO-Link device (not shown) respectively connected through the third IO port 21-c and the fourth IO port 21-d. However, the present disclosure is not limited thereto, and one transceiver 22 may be configured to communicate with two or more IO-Link devices 30.

The Ethernet port 23 may be a connection portion for communication with another IO-Link master 20-j. In addition, the Ethernet port 23 may be a connection portion for communication between the PLC 10 and the MCU 24. For example, the Ethernet port 23 may transmit a signal to another IO-Link master 20-j previously connected by the control of the MCU 24, or may receive a signal transmitted from another IO-Link master 20-j and transmit the signal to the MCU 24. For another example, the Ethernet port 23 may transmit a signal to the PLC 10 by the control of the MCU 24, or may receive a signal transmitted from the PLC 10 and transmit the signal to the MCU 24.

As described above with reference to FIG. 1, the Ethernet port 23 may be a portion connecting communication lines in a ring type between the plurality of IO-Link masters 20-a, 20-b, 20-c, and 20-n. According to an embodiment, the IO-Link master 20-j may include a first Ethernet port 23-a and a second Ethernet port 23-b. Referring to FIGS. 1 and 2, for example, in the first IO-Link master 20-a, the first Ethernet port 23-a may be a transceiving device for communication with the PLC 10, and the second Ethernet port 23-b may be a transceiving device for communication with the second IO-Link master 20-b. However, the present disclosure is not limited thereto, and the IO-Link master 20-j may be configured to communicate with the plurality of IO-Link masters 20-j or the PLC 10 through one Ethernet port 23.

The controller 24 may be a sub-controller controlling the IO-Link device 30 according to the control signal transmitted by the PLC 10. For example, the controller 24 may be configured as a MCU. In contrast, the PLC 10 is a main controller, and may be a final control device used for maintenance, management, automatic control, and monitoring of an industrial plant. For example, when the PLC 10 generates a certain control signal (e.g., reduce the pressure below a reference value) for controlling the IO-Link device 30 based on data (e.g., a measured pressure value is above the reference value)) received from the controller 24 and transmit the control signal to the controller 24, the controller 24 may control the IO-Link device 30 according to the control signal.

According to an embodiment, the controller 24 may include a first controller 24-a and a second controller 24-b that share functions of the IO-Link master 20-j. Each of the first controller 24-a and the second controller 24-b may control bidirectional data transceiving between the IO-Link device 30 and the PLC 10 connected through the IO port 21 for which each is responsible. Then, each of the first controller 24-a and the second controller 24-b may be configured so as to be connected to the IO-Link device 30 using different communication protocols, and thus, an effect of expanding the type of the IO-Link device 30 capable of communicating with the IO-Link master 20-j may be expected.

The first controller 24-a may receive data from first to fourth IO-Link devices through the first transceiver 22-a and the second transceiver 22-b, and control the first to fourth IO-Link devices according to the control signal of the PLC 10.

Specifically, the first transceiver 22-a may receive data from the first IO-Link device (not shown) and the second IO-Link device (not shown) connected through the first IO port 21-a and the second IO port 21-b, and transmit the received data to the first controller 24-a. The second transceiver 22-b may receive data from the third IO-Link device (not shown) and the fourth IO-Link device (not shown) connected through the third IO port 21-c and the fourth IO port 21-d, and transmit the received data to the first controller 24-a. When the PLC 10 generates a control signal based on the data transmitted from the first to fourth IO-Link devices, the first controller 24-a may control the first to fourth IO-Link devices according to the control signal.

The second controller 24-b may, for example, receive data from fifth to eighth IO-Link devices through the third transceiver 22-c and the fourth transceiver 22-d, and control the fifth to eighth IO-Link devices according to the control signal of the PLC 10.

Specifically, the third transceiver 22-c may receive data from the fifth IO-Link device (not shown) and the sixth IO-Link device (not shown) connected through the fifth IO port 21-e and the sixth IO port 21-f, and transmit the received data to the second controller 24-b. The fourth transceiver 22-d may receive data from the seventh IO-Link device (not shown) and the eighth IO-Link device (not shown) connected through the seventh IO port 21-g and the eighth IO port 21-h, and transmit the received data to the first controller 24-a. When the PLC 10 generates a control signal based on the data transmitted from the fifth to eighth IO-Link devices, the second controller 24-b may control the fifth to eighth IO-Link devices according to the control signal.

According to an embodiment, the first controller 24-a and the second controller 24-b may diagnose integrity by performing mutual communication with each other at regular intervals. For example, each of the first controller 24-a and the second controller 24-b may transceive a heartbeat which is a signal sent to check a state at regular intervals, and diagnose a failure state of the other party based on whether there is a change in the received data. For another example, when each of the first controller 24-a and the second controller 24-b is unable to communicate while exceeding a certain reference time (for example, when no communication message is received), each of the first controller 24-a and the second controller 24-b may diagnose the failure state of the other party.

When the first controller 24-a or the second controller 24-b diagnoses a failure event of the other party, the first controller 24-a or the second controller 24-b may transmit an alarm message corresponding to the occurrence of the failure event to the PLC 10. Then, the PLC 10 may immediately proceed with the subsequent processing corresponding to the failure event. In addition, the operation of the IO-Link device 30 connected to the first controller 24-a or the second controller 24-b, which is not in the failure state, may not be stopped. Accordingly, according to an embodiment, due to the failure of the first controller 24-a or the second controller 24-b, a problem that the operations of all the IO-Link devices 30 connected to the IO-Link master 20-j have been stopped may not occur.

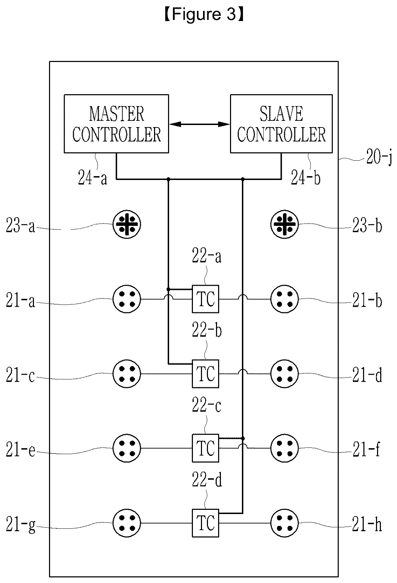

FIG. 3 is a diagram explaining a configuration of an IO-Link master of FIG. 1 in detail according to another embodiment.

Configurations and functions of the IO port 21, the transceiver 22, and the Ethernet port 23 shown in FIG. 3 are mostly the same as those illustrated in FIG. 2, and thus, the descriptions of the IO port 21, the transceiver 22, and the Ethernet port 23 shown in FIG. 3 are replaced with the descriptions of FIG. 2.

According to another embodiment, referring to FIG. 3, the IO-Link master 20-j includes the master controller 21-a serving as a master and the slave controller 21-b serving as a slave. For example, referring to FIG. 3, the plurality of IO ports 21-a, 21-b, 21-c, 21-d, 21-e, 21-f, 21-g, and 21-h may be connected in parallel to the master controller 24-a and the slave controller 24-b. That is, both the master controller and the slave controller 24-b may be controllers having the same accessibility to the plurality of IO ports 21-a, 21-b, 21-c, 21-d, 21-e, 21-f, 21-g, and 21-h, and performing the same function.

In FIG. 2, according to an embodiment, the first controller 24-a and the second controller 24-b share the functions of the IO-Link master 20-j. However, in FIG. 3, according to another embodiment, when the master controller 24-a performs the entire functions of the IO-Link master 20-j and a failure event occurs in the master controller 24-a, there is a difference in that the slave controller 24-b performs the function of the master controller 24-a instead.

Specifically, referring to FIG. 2, the first controller 24-a may be connected to the first transceiver 22-a and the second transceiver 22-b, and the second controller 24-b may be connected to the third transceiver 22-c and the fourth transceiver 22-d. However, referring to FIG. 3, both the master controller 24-a and the slave controller 24-b may be connected to the first to fourth transceivers 22-a, 22-b, 22-c, and 22-d.

In a normal mode in which the master controller 24-a normally performs a preset operation, the master controller 24-a may control bidirectional data transceiving between a plurality of IO-Link devices and the PLC 10 connected through the plurality of IO ports 21-a, 21-b, 21-c, 21-d, 21-e, 21-f, 21-g, and 21-h. In an event mode in which the failure event occurs in the master controller 24-a, the slave controller 24-b may perform all the functions of the master controller 24-a instead. Therefore, according to another embodiment, even if the master controller 21-a is in the failure state, all the IO-Link devices 30 connected to the IO-Link master 20-j may be normally operated by the slave controller 24-b.

The slave controller 24-b may diagnose integrity of the master controller 24-a by performing mutual communication with the master controller 24-a at regular intervals. For example, the slave controller 24-b may transmit a heartbeat which is a signal sent to check a state at regular intervals, to the master controller 24-a and diagnose a failure state of the master controller 24-a based on whether there is a change in data received from the master controller 24-a. For another example, when the master controller 24-a is unable to communicate while exceeding a certain reference time (for example, no communication message is received), the slave controller 24-b may diagnose the failure state of the master controller 24-a.

When the slave controller 24-b diagnoses the failure event of the master controller 24-a, the slave controller 24-b may transmit an alarm message corresponding to the occurrence of the failure event to the PLC 10. Then, the PLC 10 may immediately proceed with the subsequent processing corresponding to the failure event. In addition, the plurality of IO-Link devices 30 connected through the plurality of IO ports 21-a, 21-b, 21-c, 21-d, 21-e, 21-f, 21-g, and 21-h may operate normally as before by the control of the slave controller 24-b.

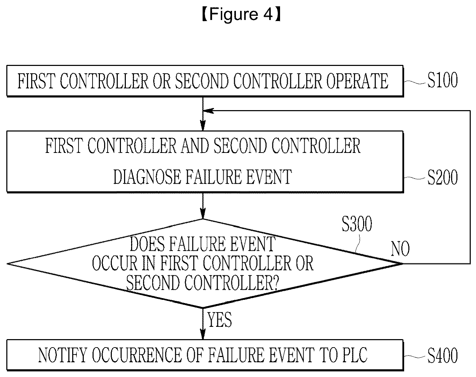

FIG. 4 is a flowchart illustrating a method of operating a dual MCU according to an embodiment.

Referring to FIG. 4, the first controller 24-a controls a first IO-Link device according to a first control signal of the PLC 10, and the second controller 24-b controls a second IO-Link device according to a second control signal of the PLC 10 to drive an IO-Link master (S100).

Referring to FIG. 2, each of the first controller 21-a and the second controller 21-b may control bidirectional data transceiving between the IO-Link device 30 and the PLC 10 connected through the IO port 21 for which each is responsible.

The first controller 24-a, for example, may receive data from first to fourth IO-Link devices through the first transceiver 22-a and the second transceiver 22-b, and control the first to fourth IO-Link devices according to a control signal of the PLC 10. The second controller 24-b may, for example, receive data from fifth to eighth IO-Link devices through the third transceiver 22-c and the fourth transceiver 22-d, and control the fifth to eighth IO-Link devices according to the control signal of the PLC 10.

Then, the first controller 24-a and the second controller 24-b may diagnose occurrence of a failure event by performing mutual communication with each other at regular intervals (S200).

For example, each of the first controller 24-a and the second controller 24-b may transceive a heartbeat which is a signal sent to check a state at regular intervals, and diagnose a failure state of the other party based on whether there is a change in the received data.

For another example, when each of the first controller 24-a and the second controller 24-b is unable to communicate while exceeding a certain reference time (for example, no communication message is received), each of the first controller 24-a and the second controller 24-b may diagnose the failure state of the other party.

Then, when the failure event occurs in the first controller 24-a or the second controller 24-b (S300, Yes), the first controller 24-a or the second controller 24-b in which no failure event occurs may transmit an alarm message corresponding to the occurrence of the failure event to the PLC 10 (S400).

Then, the PLC 10 may immediately proceed with the subsequent processing corresponding to the failure event. In addition, the operation of the IO-Link device 30 connected to the first controller 24-a or the second controller 24-b, which is not in the failure state, may not be stopped. Accordingly, according to an embodiment, due to the failure of the first controller 24-a or the second controller 24-b, a problem that the operations of all the IO-Link devices 30 connected to the IO-Link master 20-j have been stopped may not occur.

Then, when no failure event occurs in the first controller 24-a or the second controller 24-b (S300, No), step S200 may proceed.

Although the embodiments of the present disclosure have been described in detail above, the scope of the present disclosure is not limited thereto, and various modifications and improvements made by those skilled in the art in the field to which the present disclosure pertains are also within the scope of the present disclosure.

## Claims

1. An IO-Link master comprising:
a first controller configured to transmit first data collected by a first IO-Link device to a programmable logic controller (PLC) and control the first IO-Link device according to a first control signal of the PLC; and
a second controller configured to transmit second data collected by a second IO-Link device to the PLC and control the second IO-Link device according to a second control signal of the PLC,
wherein each of the first controller and the second controller is configured to
communicate at a certain period to diagnose an occurrence of a failure event of the other party.

2. The IO-Link master of claim 1, wherein:
each of the first controller and a second controller is configured to
diagnose that the failure event occurs when no communication message is received for more than a reference time.

3. The IO-Link master of claim 1, wherein:
each of the first controller and a second controller is configured to
transmit an alarm message corresponding to the occurrence of the failure event to the PLC when each of the first controller and a second controller diagnoses the occurrence of the failure event.

4. The IO-Link master of claim 1, wherein:
the first IO-Link device is configured to
transmit the first data to a first transceiver in a first communication method,
and
the second IO-Link device is configured to
transmit a second data to a second transceiver in a second communication method.

5. The IO-Link master of claim 1, further comprising:
a first transceiver connected to the first IO-Link device through a first IO port to receive the first data and transmit the received first data to the first controller; and
a first transceiver connected to the second IO-Link device through a second IO port to receive the second data and transmit the received second data to the second controller.

6. An IO-Link master comprising:
a master controller configured to transmit data collected by an IO-Link device to a programmable logic controller (PLC) and control the IO-Link device according to a control signal of the PLC; and
a slave controller configured to communicate with the master controller at a certain period, and, when diagnosing an occurrence of a failure event of the master controller, replace and perform a function performed by the master controller.

7. The IO-Link master of claim 6, wherein:
the slave controller is configured to
diagnose that the failure event has occurred in the master controller when no communication message is received from the master controller for more than a reference time.

8. The IO-Link master of claim 6, wherein:
the slave controller is configured to
transmit an alarm message corresponding to the occurrence of the failure event to the PLC when the slave controller diagnoses the occurrence of the failure event.

9. A method of operating a dual controller, the method comprising:
driving an IO-Link master by a first controller controlling a first IO-Link device according to a first control signal of a programmable logic controller (PLC), and a second controller controlling a second IO-Link device according to a second control signal of the PLC;
the first controller and the second controller diagnosing an occurrence of a failure event of the other party when a certain period arrives; and
the first controller or the second controller transmitting an alarm message corresponding to the occurrence of the failure event of the other party to the PLC when the failure event occurs as a result of diagnosing.

10. The method of claim 9, wherein:
the diagnosing of the occurrence of the failure event of the other party includes
diagnosing that the failure event occurs when no communication message is received for more than a reference time.
